# EUROPÄISCHE PATENTSCHRIFT

(11) **EP 0 414 101 B1**
(45) Veröffentlichungstag und Bekanntmachung des Hinweises auf die Patenterteilung: **15.06.1994**
(21) Anmeldenummer: 90115564.8
(22) Anmeldetag: 14.08.1990
(51) Int. Cl.: G11B 5/706

(54) **Magnetischer Aufzeichnungsträger**
Magnetic recording medium
Milieu d'enregistrement magnétique

(30) Priorität: 22.08.1989 DE 3927622
(43) Veröffentlichungstag der Anmeldung: 27.02.1991
(73) Patentinhaber: BASF Aktiengesellschaft, 67063 Ludwigshafen (DE)
(72) Erfinder: Ohlinger, Manfred, Dr., D-6710 Frankenthal (DE); Kovacs, Jenoe, Dr., D-6717 Hessheim (DE)

(56) Entgegenhaltungen:
- DE-A- 1 955 699
- DE-A- 3 322 746
- PATENT ABSTRACTS OF JAPAN, Band 10, Nr. 271 (P-497)[2327], 16. September 1986;& JP-A-61 94 231 (VICTOR CO. OF JAPAN) 13-05-1986
- PATENT ABSTRACTS OF JAPAN, Band 9, Nr. 177 (P-375)[1900], 23. Juli 1985;& JP-A-60 50 725 (RICOH K.K.) 20-03-1985

## Beschreibung

Die Erfindung betrifft magnetische Aufzeichnungsträger aus einem nichtmagnetischen Trägermaterial und einer darauf angeordneten magnetisierbaren Schicht, im wesentlichen bestehend aus einem magnetischen Material aus der Gruppe der Kobalt-modifizierten Eisenoxide und anorganischen Stützsubstanzen feinverteilt in organischen Bindemitteln.

Im Rahmen der Weiterentwicklung der magnetischen Aufzeichnungstechnik werden insbesondere bei der magnetischen Bildaufzeichnung an die Aufzeichnungsträger hohe Anforderungen, sowohl hinsichtlicn ihrer magnetischen, bzw. elektromagnetischen Eigenschaften als auch ihrer mechanischen Stabilität gestellt. Eine Verknüpfung dieser beiden Parameter findet sich in der für die Tauglichkeit von Videobändern wesentlichen Homogenität und Oberflächenbeschaffenheit der Magnetschicht. Während sich bezüglich des schichtbildenden Bindemittels eine Vielzahl von physikalisch-trocknenden oder vernetzten Polymeren bzw. Polymermischungen bewährt hat, ist hinsichtlich des magnetischen Materials das ferromagnetische Kobalt-modifizierte Eisenoxid oder der Barium- bzw. Strontiumferrit für die meisten Anwendungsfälle das geeignete Material. Es hat sich inzwischen jedoch als notwendig erwiesen, Kobalt-modifizierte Eisenoxide oder Ferrite mit harten, sphärischen und unmagnetischen Stoffen abzumischen. Eine der wesentlichen Gründe sind die mechanischen Eigenschafter der Magnetschicht. Ohne diese Füller, auch Stützsubstanzen genannt, werden die Magnetköpfe der Recorder schnell zugeschmiert. Allerdings setzen solche unmagnetischen Materialien die remanente Magnetisierung der Aufzeichnungsträger deutlich herab, so daß bestimmte, insbesondere die Audioeigenschaften, maßgeblich verschlechtert werden. Es ist außerdem schwierig, nadelige, magnetische Materialien und unmagnetische, sphärische Stoffe für die Dispersion so aufeinander anzupassen, daß keine Phasentrennung zwischen nadelförmigen und sphärischen Stoffen auftritt. Die Folge wären inhomogene Oberflächen der Magnetschicht sowie eine Anhäufung der Stützstoffe an der Oberfläche. Dadurch wurde dann die Aufzeichnungsqualität insbesondere hinsichtlich der hochfrequenten Videoinformation beeinträchtigt worden.

Die JP-A-61-094 231 beschreibt einen magnetischen Aufzeichnungsträger, bei dem zur Optimierung von Wiedergabeleistung, Laufeigenschaften und Verringerung der Transparenz als magnetisches Pigment hauptsächlich hexagonaler plättchenförmiger Ferrit vorhanden war, dem 0,5 - 50 % CrO₂, bezogen auf die Menge an Ferrit, zugemischt war.

Aus der DE-A 19 55 699 sind seit langem magnetische Aufzeichnungsträger bekannt, die in der Magnetschicht als magnetisches Material Mischungen an Chromdioxid und dotierten bzw. undotierten Eisenoxiden in einem Mischungsverhältnis zwischen 1 : 4 bis 4 : 1 aufweisen. Magnetische Aufzeichnungsträger mit entsprechenden Magnetmaterialmischungen haben jedoch den Nachteil, daß die ausgezeichneten magnetischen Eigenschaften des Chromdioxids und die daraus abzuleitende Aufzeichnungs-Empfindlichkeit durch den hohen Anteil an Eisenoxiden nachhaltig verschlechtert werden. Die Zumischung von Chromdioxid in hohen Mengen führt andererseits zu merklicher Abnutzung der Videoköpfe.

Es bestand daher die Aufgabe, magnetische Aufzeichnungsträger, die insbesondere für die Videoaufzeichnung geeignet sind, bereitzustellen, die die vorgenannten Nachteile nicht aufweisen und bei einwandfreier Oberflächenbeschaffenheit der Magnetschicht sowohl hinsichtlich homogenität und Glätte als auch beim Aufzeichnungs- und Wiedergabebetrieb, d.h. beim Band/Kopfkontakt, bezüglich des Blockierens und des Kopfabriebs eine hohe Bild- und Tonqualität gewährleisten.

Es wurde nun gefunden, daß magnetische Aufzeichnungsträger aus einem nicht-magnetischen Trägermaterial und einer darauf angeordneten magnetisierbaren Schicht, im wesentlichen bestehend aus einem magnetischen Material aus der Gruppe der Kobalt-modifizierten Eisenoxide und anorganischen Stützsubstanzen feinverteilt in organischen Bindemitteln die gestellte Aufgabe lösen, wenn als magnetische Material hauptsächlich nadelförmiges Co-modifiziertes Gamma-Eisen (III)-Oxid mit einer Koerzitivfeldstärke von 30 - 128 KA/m und einer spezifischen Oberfläche von 20 - 128 m²/g verwendel wird und wenn als anorganische Stützsubstanz nadelförmiges ferromagnetisches Chromdioxid mit einer Koerzitivfeldstärke von größer 24 kA/m und einer spezifischen Oberfläche zwischen 20 und 60 m²/g in einer Menge von ≧ 55/9 % und < 20 %, bezogen auf die Gesamtmenge an magnetischem Material, in der Magnetschicht enthalten ist.

Die für die erfindungsgemäßen Aufzeichnungsträger geeigneten Kobalt-modifizierten Eisenoxide oder Ferrite sind wie auch das Chromdioxid als magnetische Materialien bekannt, ebenso ihre Herstellung. Die Koerzitivfeldstärken der Kobalt-modifizierten Eisenoxide betragen 30 bis 128 kA/m, und die des Chromdioxids mehr als 24 und insbesondere 26 bis 80 kA/m. Die zum Einsatz im erfindungsgemäßen Aufzeichnungsträger geeigneten magnetischen Materialien sollen eine Teilchenlänge zwischen 0,1 und 1,0 »m, insbesonder zwischen 0,2 und 0,8 »m und ein Längen- : Dicken-Verhältnis von 10 : 1 bis 20 : 1 aufweisen, ihr Teilchenvolumen beträgt vorteilhafterweise 0,2 · 10⁻⁴ bis 2,0 · 10⁻⁴ »m³. Zudem ist es bei den erfindungsgemäßen Aufzeichnungsträgern wesentlich, daß die spezifische Oberfläche nach BET für das Chromdioxid > 20 m²/g, bevorzugt > 25 m²/g ist und bis zu 60 m²/g beträgt. Die spezifischen Oberflächen der übrigen magnetischen Materialien können in der gleichen Größenordnung sein.

Zur Herstellung der erfindungsgemäßen Aufzeichnungsträger werden die feinteiligen magnetischen Materialien, das Kobalt-modifizierte Eisenoxid, insbesondere Gamma-Eisen-(III)oxid und das Chromdioxid zusammen mit den üblichen Zusatzstoffen, wie Dispergierhilfsmitteld, beispielsweise Natriumoleat, Zinkoleat, Natriumlaurat, -palmitat, -stearat, Ethylenoxid modifizierte Hilfsmittel, kammartiger Polyimine, Polyamide, organische Phosphorsäureester sowie gegebenenfalls den nichtmagnetischen Füllstoffen, beispielsweise Quarzmehl, Pulver auf Silikatbasis, Aluminiumoxid, Zirkonoxid, die die Mechanik der Magnetschicht nicht wesentlich beeinflussen, und den in organischen Lösungsmitteln gelösten Bindemitteln, beispielsweise elastomere Polyurethane, Epoxyharze, Vinylchlorid- Vinvlacetat-Copolymere, mit polyfunktionellen Isocyanaten vernetzte OH-Gruppen-haltige Polyurethane sowie Mischungen davon in einer Dispergiereinrichtung, beispielsweise einer Topf- oder Rührwerksmühle, zu einer Dispersion verarbeitet. Diese Dispersion wird anschließend mit Hilfe üblicher Beschichtungsmaschinen auf den nichtmagnetischen Träger aufgebracht. Als nichtmagnetische Träger lassen sich die üblichen Trägermaterialien verwenden, insbesondere Folien aus linearen Polyestern, wie Polyethylenterephthalat, ein allgemein in Stärken von 4 bis 20 »m. Bevor die noch flüssige Beschichtungsmischung auf den Träger getrocknet wird, was zweckmäßigerweise bei Temperaturen von 50 bis 90°C während 10 bis 200 Sekunden geschieht, werden die anisotropen Magnetteilchen durch die Einwirkung eines Magnetfeldes entlang der vorgesehenen Aufzeichnungsrichtung orientiert. Anschließend können die Magnetschichten durch Hindurchführen zwischen geheizten und polierten Walzen, gegebenenfalls bei Anwendung von Druck und Temperaturen von 50 bis 100°C, vorzugsweise 60 bis 90°C, geglättet und verdichtet werden. Die Dicke der Magnetschicht beträgt im allgemeinen 2 bis 6 »m.

Die erfindungsgemäßen magnetischen Aufzeichnungsträger weisen eine hohe Homogenität und Glätte der Magnetschicht auf, ohne daß beim Betrieb dieser Aufzeichnungsträger ein Blockieren auftritt. Außerdem ließen sich auf diese Weise die für hochwertige Videoaufzeichnungseigenschaften erforderlichen äußerst feinteiligen Kobalt-modifizierten Eisenoxide einsetzen, ohne daß sich die durch die üblichen anorganischen Stützstoffe, wie beispielsweise Ruß oder Quarzmehl, bedingten Pegelverminderungen oder Schichtinhomogenitäten ergaben. Damit konnte die HIFI-Qualität der Videobänder deutlich verbessert werden, da praktisch keine Remanenzverluste auftreten. Der Effekt der Stützeigenschaft ist durch die leichte Agglomeration der Cro₂-Teilchen auf den Bandoberflächen, die eine Berührung der Bandoberfläche durch den harten Videokopf verhindert.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht.

### Vergleichsversuch 1

640 Teile einer 12,5 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 100 Teile einer 20 %igen Lösung eines Phenoxyharzes aus Bisphenol A und Epichlorhydrin im gleichen Lösungsmittelgemisch wurden mit 900 Teilen eines Chromdioxids mit einer Koerzitivfeldstärke von 48,5 kA/m und einer spezifischen Oberfläche nach BET von 28,0 m²/g, 2,25 Teilen Zinkoleat und weiteren 660 Teilen des genannten Lösungsmittelgemisches in einer 6 000 Volumenteile fassenden und mit 8 000 Teilen Stahlkugeln eines Durchmessers von 4 bis 6 mm gefüllten Kugelmühle 68 Stunden dispergiert. Anschließend wurden nochmals 640 Teile der genannten Polyesterurethan-Lösung und 100 Teile der Phenoxyharzlösung sowie 18 Teile Butylstearat, 4,5 Teile Stearinsäure und 400 Teile des genannten Lösungsmittelgemisches zugegeben und nochmals 24 Stunden dispergiert. Die erhaltene Dispersion wurde unter Druck durch einen Filter mit 5 »m Poren filtriert und auf eine 14,5 »m dicke Polyethylenterephthalatfolie mittels eines üblichen Linealgießers aufgetragen.

Die beschichtete Folie wurde nach Durchlaufen eines Magnetfeldes zur Ausrichtung der magnetischen Teilchen bei Temperaturen zwischen 60 und 80°C getrocknet. Nach der Trocknung wurde die Magnetschicht der beschichteten Folie durch zweimaliges Hindurchführen zwischen beheiztend Walzen (85°C unter einem Liniendruck von 35 kg/cm) verdichtet und geglättet. Die Dicke der Magnetschicht betrug dann 4 »m. Nach dem Schneiden der beschichteten Folie in 1/2" breite Videobänder, wurden diese auf einem handelsüblichen VHS-Recorder der Firma Victor Company of Japan gegen das Bezugsband (OdB) geprüft.

### 1. Standbild:

Die Angabe der Dauerstandzeit ist die Zeitspanne (in Minuten), in der eine Bildaufzeichnung auf einem handelsüblichen VHS-Recorder als Standbild, d.h. bei stehendem Magnetband und rotierendem Kofrad, bis zum ersten Pegeleinbruch von 16 dB wiedergegeben werden kann.

### 2. Videostörabstand (Video S/N):

Verhältnis des Luminanzsignals einer 100 % Weißbildes zum Rauschpegel, gemessen mit dem Störspannungsmesser UPSF der Firma Rohde dund Schwarz (> 100 kHz).

Außerdem wurden die Oberflächenrauhigkeit als gemittelte Rauhtiefe R_{z} gemäß DIN 4768, Blatt 1 und der Kopfabschliff bestimmt. Der Kopfabschliff wird mit Hilfe eines Meßmikroskops gemessen und in »m angegeben. Zu diesem Zweck wird das Videoband 200 Stunden im Revisierbetrieb (entsprechend 100 Durchläufen) auf einem handelsüblichen VHS-Recorder betrieben und der Kopfabschliff an den serienmäßigen Ferrit-Magnetköpfen gemessen.

Die Meßergebnisse sind in der Tabelle angegeben.

### Vergleichsversuch 2

Es wurde, wie im Vergleichsversuch 1 beschrieben, verfahren, jedoch wurde anstelle des Chromdioxids 900 Teile eines Kobalt-modifizierten Gamma-Eisen-(III)oxids mit einer spezifischen Oberfläche nach BET von 27,2 m²/g und einer Koerzitivfeldstärke von 51,6 kA/m eingesetzt. Die Meßergebnisse sind in der Tabelle angegeben.

### Beispiel 1

Es wurde, wie im Vergleichsversuch 2 beschrieben, verfahren, jedoch wurde anstelle der 900 Teile des Kobalt-modifizierten Gamma-Eisen(III)oxids nur 845 Teile dieses Materials und 55 Teile Chromdioxid mit einer spezifischen Oberfläche nach BET von 25 g/m gemäß Vergleichsversuch 1 eingesetzt. Die Meßergebnisse sind in der Tabelle angegeben.

### Beispiel 2

Es wurde, wie im Vergleichsversuch 2 beschriebend, verfahren, jedoch wurden anstelle der 900 Teile des modifizierten Eisenoxids 750 des gleichen Oxcids und 150 Teile des Chromdioxids mit einer spezifischen Oberfläche nach BET von 30 m²/g eingesetzt. Die Meßergebnisse sind in der Tabelle angegeben.

### Beispiel 3

Es wurde, wie im Beispiel 2 beschrieben, verfahren, jedoch wurde ein Kobalt-dotiertes Eisenoxid mit einem H_{c}-Wert von 68 kA/m und mit einer spezifischen Oberfläche von 52 g/m² eingesetzt, wobei die Menge des Lösungsmittels um 10 % erhöht wurde. Die Meßergebnisse sind in der Tabelle angegeben.

### Beispiel 4

Es wurde, wie in Beispiel 2 beschriebend, verfahren, jedoch wurde anstelle des Kobalt-modifiziertend Eisenoxids mit einer spezifischen Oberfläche nach BET von 27,2 m²/g ein solches mit einer Oberfläche von 35,2 m²/g eingesetzt. Die Meßergebnisse sind in der Tabelle angegeben.

### Vergleichsversuch 3

Es wurde, wie im Vergleichsbeispiel 2 beschrieben, verfahren, jedoch wurde anstelle der 900 Teile eines Kobalt-modifizierten Eisenoxids 450 Teile des gleichen Oxids und 450 Teile des Chromdioxids aus Vergleichsbeispiel 1 eingesetzt. Die Meßergebnisse sind in der Tabelle angegeben.

**Tabelle**

| Versuchs-Nr. | Rauhigkeit R_{z} (»m) | Kopfabschliff (»m) | Standbild (Min.) | Dauerlauf 100 Std. | S/N (dB) |
|---|---|---|---|---|---|
| Vergl. Vers. 1 | 0,15 | > 5 | > 60 | in Ordnung | + 1,5 |
| Vergl. Vers. 2 | 0,16 | 1,0 | < 10 | transparante Stellen | + 0,8 |
| Beispiel 1 | 0,15 | 1,0 | > 60 | in Ordnung | + 1,0 |
| Beispiel 2 | 0,12 | 1,5 | > 60 | in Ordnung | + 1,4 |
| Beispiel 3 | 0,10 | 0,8 | > 60 | in Ordnung | - 0,2 |
| Beispiel 4 | 0,12 | 1,0 | > 60 | in Ordnung | + 1,3 |
| Vergl.Vers. 3 | 0,12 | 4,0 | > 60 | nicht in Ordnung, Kopf hat sich zugesetzt | - |

## Patentansprüche

1. Magnetischer Aufzeichnungsträger aus einem nichtmagnetischen Trägermaterial und einer darauf angeordneten magnetisierbaren Schicht, im wesentlichen bestehend aus einem magnetischen Material aus der Gruppe der Kobalt-modifizierten Eisenoxide und anorganischen Stützsubstanzen feinverteilt in organischen Bindemitteln, dadurch gekennzeichnet, daß das magnetische Material hauptsächlich Co-modifiziertes nadelförmiges gamma-Eisen(III)oxid mit einer Koerzitivfeldstärke von 30 - 128 kA/m und einer spezifischen Oberfläche zwischen 20 und 60 m²/g ist und daß als anorganische Stützsubstanz nadelförmiges ferromagnetisches Chromdioxid mit einer Koerzitivfeldstärke von größer 24 kA/m und einer spezifischen Oberfläche zwischen 20 und 60 m²/g in einer Menge von ≧ 55/9 % und < 20 %, bezogen auf die Gesamtmenge an magnetischem Material in der Magnetschicht enthalten ist.

## Claims

1. A magnetic recording medium comprising a non-magnetic substrate and a magnetizable layer which is arranged thereon and essentially consists of a magnetic material selected from the group consisting of the cobalt-modified iron oxides and inorganic supporting substances finely distributed in organic binders, wherein the magnetic material is mainly Co-modified acicular gamma-iron(III) oxide having a coercive force of 30-128 kA/m and a specific surface area of from 20 to 60 m²/g, and acicular ferromagnetic chromium dioxide having a coercive force greater than 24 kA/m and a specific surface area of 20 to 60 m²/g is present as the inorganic supporting substance in the magnetic layer, in an amount of ≧ 55/9% and < 20%, based on the total amount of the magnetic material.

## Revendications

1. Support d'enregistrement magnétique, composé d'un matériau support non magnétique et d'une couche magnétisable, placée dessus, se composant essentiellement d'un matériau magnétique du groupe des oxydes de fer modifiés au cobalt et de substances d'appui inorganiques finement réparties dans des liants organiques, caractérisé en ce que le matériau magnétique est principalement de l'oxyde ferreux magnétique gamma, aciculaire, modifié au cobalt, ayant une intensité de champ coercitif compris dans la plage allant de 30 à 128 kA/m et une surface spécifique comprise entre 20 et 60 m²/g, et en ce que la couche magnétique contient, comme substance d'appui inorganique, du dioxyde de chrome ferromagnétique, aciculaire, ayant une intensité de champ coercitif supérieure à 24 kA/m et une surface spécifique comprise entre 20 et 60 m²/g en une quantité ≧ 55/9 % et < 20 %, rapporté à la quantité totale de matériau magnétique dans la couche magnétique.
